# EUROPEAN PATENT APPLICATION

(11) **EP 4 197 972 A1**
(43) Date of publication of application: **21.06.2023**
(21) Application number: 22771401.1
(22) Date of filing: 14.03.2022
(51) Int. Cl.: C01B 39/48, B01J 29/70

(54) **METHOD FOR PRODUCING ARTIFICIAL MINERAL, AND ARTIFICIAL MINERAL**

(30) Priority: 15.03.2021 JP 2021041070
(71) Applicant: AC Biode Ltd., Kyoto-shi, Kyoto 606-0024 (JP)
(72) Inventor: MIZUSAWA, Atsushi, Kyoto-shi, Kyoto 606-0024 (JP)
(74) Representative: Hoeger, Stellrecht & Partner Patentanwälte mbB
(86) International application number: PCT/JP2022/011440
(87) International publication number: WO 2022/196656

(57) **Abstract**

The present invention is a production method of an artificial mineral, the method crystallizing an amorphous precursor gel containing one or more kinds of metal elements by a synthesis reaction in which the amorphous precursor gel is heated and pressurized under a predetermined condition, the method including freezing and drying the amorphous precursor gel before the synthesis reaction. Freezing the amorphous precursor gel fixes the aggregated state of elementary units in the amorphous precursor gel, so that when the amorphous precursor gel is dried and crystallized, an artificial mineral having a predetermined crystal structure can be obtained.

## Description

### TECHNICAL FIELD

The present invention relates to a production method of an artificial mineral, and an artificial mineral.

### BACKGROUND ART

An artificial mineral is produced (synthesized) by crystallizing an amorphous precursor gel by a method such as a deposition precipitation method, a hydrothermal synthesis method, a solvothermal method, a dry gel conversion method, or a firing method. By crystallization, an artificial mineral in the form of particles, thin films, or the like is obtained.

The amorphous precursor gel is composed of a raw material including a metal element as a main component, and a semiconductor element and a non-metal element as other components, and various materials that determine the crystal structure, the pore structure, and the like of the artificial mineral, including a pH adjuster, a surfactant, a polymer compound, and an organic cation called a structure directing agent. In order to obtain an artificial mineral having a desired physical property, it is important to appropriately set the kinds, mixing ratio, mixing method, and the like of the components contained in the raw material and other materials of the precursor gel.

A mineral crystal is composed of a repeating structure of a minimum unit structure called an elementary unit or a cluster. It has been found that the minimum unit structure of the mineral crystal is already formed in the amorphous precursor gel. It is considered that water molecules and solvent molecules coordinated to the minimum unit structure of the crystal are desorbed in the process of heating or pressurizing the amorphous precursor gel, and thus the crystallization proceeds.

For example, Non Patent Literature 1 discloses that, as a result of performing in situ X-ray absorption fine structure (XAFS) analysis using radiation light for an artificial mineral having MoO₄(H₂AsO₄)₂ as an elementary unit, the stereochemical structure of the elementary unit includes a hexacoordinated octahedron around a molybdenum atom and a tetracoordinated tetrahedron around an arsenic atom, and the stereochemical structure of the elementary unit is also formed in an amorphous precursor gel. It has been found that, since the size of the elementary unit is about 0.1 nm, the sequence and arrangement of elements at a scale of 0.1 nm are almost determined in the precursor gel by analysis using XAFS.

In addition, there are reports on the process of crystallization of synthetic zeolite from precursor gel. For example, by analysis using NMR (Non Patent Literature 2) or by analysis using in situ small-angle X-ray scattering (SAXS) and wide-angle X-ray scattering (WAXS) (Non Patent Literature 3), it has been reported that a minimum unit structure (a structure in which a plurality of elementary units are aggregated) in several nm scale of a zeolite crystal is formed in a precursor gel. In the analysis by NMR, SAXS, or WAXS, the structure of several nm scale can be clarified. Therefore, although the sequence and arrangement of the elements in the elementary units on the 0.1 nm scale are not clear, it can be analyzed that elementary units are formed in the precursor gel and how the elementary units are aggregated and crystallized. It has been found that, since considerable arbitrariness occurs in a structure of a scale of several nm in a state in which elementary units (0.1 nm scale) are aggregated, there is a large uncertainty in the process in which a large number of elementary units are sequenced and arranged in an orderly manner to form a final crystal structure.

Since elementary units on the 0.1 nm scale of the mineral crystal are already formed at the stage of the precursor gel, it should be possible to obtain an artificial mineral having a target crystal structure to some extent by performing crystallization while maintaining the sequence and arrangement of the element in the elementary units. However, in the amorphous precursor gel, the aggregated state of the elementary units is not stable and is not unique. Therefore, even if the kinds and mixing ratio of the elements contained in the raw material of the precursor gel, or the kinds and addition amount of other materials are the same, there is a problem in that the aggregated state of the elementary units in the precursor gel changes depending on the preparation temperature and preparation time of the precursor gel, the preparation amount (production scale), the time from the preparation of the precursor gel to the start of the crystallization process, and the like, and the physical properties of the resulting artificial mineral are not stabilized.

### CITATION LIST

### PATENT LITERATURE

Patent Literature 1: WO 2004/040635 A1
Patent Literature 2: JP 2013-129590 A

### NON PATENT LITERATURE

Non Patent Literature 1: Atsushi Mizusawa, "XAFS Investigations of Hydrothermal Processes", The Graduate University for Advanced Studies, dissertation, 2004
Non Patent Literature 2: Chil-Hung Cheng and Daniel F. Schantz, 29Si NMR Studies of Zeolite Precursor Solutions, J.Phys.Chem.B 2006, 110 313-318
Non Patent Literature 3: P. P. E. A. D. Moor et al., Imaging the Assembly Process of the Organic-Mediated Synthesis of a Zeolite, Chem. Eur. J, 1999, 5, No. 7, 2083
Non Patent Literature 4: Development of SAPO-based Zeolite Catalyst using Organosilane as a Si Source, Manuscripts of the annual meeting of The Society of Chemical Engineers, March 13, 2016
Non Patent Literature 5: Defect engineering to boost catalytic activity of Beta zeolite on low-density polyethylene cracking. Materials Today Sustainability, Available online 27 December 2021, 100098

### SUMMARY OF INVENTION

### TECHNICAL PROBLEM

A problem to be solved by the present invention is to stably obtain an artificial mineral having a predetermined crystal structure and physical properties.

### SOLUTION TO PROBLEM

The present invention is a production method of an artificial mineral, the method crystallizing an amorphous precursor gel containing one or more kinds of metal elements by a synthesis reaction in which the amorphous precursor gel is heated and pressurized under a predetermined condition, the method including
freezing and drying the amorphous precursor gel before the synthesis reaction.

Freezing the amorphous precursor gel fixes the aggregated state of elementary units in the amorphous precursor gel. Therefore, when the frozen amorphous precursor gel is dried, and then crystallized through a treatment such as precipitation by pH adjustment at room temperature, humidification, heating, and pressurization, an artificial mineral having a homogeneous crystal structure can be obtained. In order to fix the aggregated state of the elementary units in the amorphous precursor gel in a state necessary for obtaining an artificial mineral having a target crystal structure, it is important to freeze the amorphous precursor gel at an appropriate timing and under an appropriate condition. The timing and condition of freezing can be experimentally obtained. Here, the freezing conditions include a freezing temperature, a freezing speed, a freezing time, and the like.

In the present invention, in order to fix the aggregated state of the elementary units in the amorphous precursor gel, it is desirable to freeze the amorphous precursor gel in as short a time as possible (that is, rapidly). Examples of the method of rapidly freezing include a method of immersing a container containing the amorphous precursor gel in liquid nitrogen. The freezing and drying of the amorphous precursor gel may be performed using separate apparatuses, or may be performed using one apparatus such as a freeze drying machine.

The production method of the present invention may use, as the synthesis reaction, a method selected from a deposition precipitation method, a hydrothermal synthesis method, a solvothermal method, a dry gel conversion method, an atom planting method, and a firing method.

In the production method of an artificial mineral of the present invention, the amorphous precursor gel may contain one or more kinds of elements selected from scandium, titanium, vanadium, chromium, manganese, iron, cobalt, nickel, copper, zinc, gallium, yttrium, zirconium, niobium, molybdenum, ruthenium, rhodium, palladium, silver, cadmium, indium, tin, lanthanoid elements, hafnium, tantalum, tungsten, rhenium, and osmium, and
in the amorphous precursor gel, an element contained in the amorphous precursor gel may have a coordination structure having a hexacoordinated octahedron as a unit structure, and at least some unit structures may be heterogeneous hexacoordinated octahedrons in which two ligands among the six ligands are different from the other four ligands.

Furthermore, in the production method of an artificial mineral of the present invention, the amorphous precursor gel may contain one or more kinds of elements selected from aluminum, silicon, phosphorus, germanium, arsenic, selenium, antimony, tellurium, and bismuth, and
in the amorphous precursor gel, an element contained in the amorphous precursor gel may have a coordination structure having a tetracoordinated tetrahedron as a unit structure, and at least some unit structures may be heterogeneous tetracoordinated tetrahedrons in which one ligand among the four ligands is different from the other three ligands.

When, in the amorphous precursor gel, an element contained in the precursor gel has a coordination structure having a hexacoordinated octahedron as a unit structure, and at least some unit structures are heterogeneous hexacoordinated octahedrons, or an element contained in the precursor gel has a coordination structure having a tetracoordinated tetrahedron as a unit structure, and at least some unit structures are heterogeneous tetracoordinated tetrahedrons, the artificial mineral obtained by the production method of the present invention has an active site of a superstrong acid present on the crystal surface. In this case, by setting the ratio of the heterogeneous hexacoordinated octahedrons or the heterogeneous tetracoordinated tetrahedrons contained in the amorphous precursor gel to more than 8.5 mol% and 15 mol% or less, the active site of the superstrong acid can be more effectively present on the crystal surface of the resulting artificial mineral.

Therefore, an artificial mineral according to the present invention is obtained by the above-described production method, and is characterized in that an active site of a superstrong acid is present on the crystal surface.

### ADVANTAGEOUS EFFECTS OF INVENTION

According to the present invention, an artificial mineral having a predetermined crystal structure and physical properties can be stably obtained.

### BRIEF DESCRIPTION OF DRAWINGS

Fig. 1 is a diagram for explaining a procedure of experimental examples, which are examples of a production method of an artificial mineral according to the present invention.
Fig. 2 is a diagram for explaining a procedure of a production method of an artificial mineral according to a comparative example.
Fig. 3A shows an estimated crystal structure of a BEA zeolite (2), and Fig. 3B shows an estimated crystal structure of a BEA zeolite (1).
Fig. 4 is an X-ray powder diffraction chart of a BEA zeolite (4) obtained in Third Experimental Example.
Fig. 5 is an X-ray powder diffraction chart of a BEA zeolite (5) obtained in Fourth Experimental Example.
Fig. 6 is an X-ray powder diffraction chart of a BEA zeolite containing no heterotetrahedron.
Fig. 7A is an appearance photograph of a flat plate-shaped BEA zeolite obtained in Fifth Experimental Example as viewed from a wide side, and Fig. 7B is an appearance photograph of the flat plate-shaped BEA zeolite as viewed from a narrow side (scale interval in the photograph is 1 mm).
Fig. 8 is an X-ray powder diffraction chart of the flat plate-shaped BEA zeolite obtained in Fifth Experimental Example.

### DESCRIPTION OF EMBODIMENTS

An amorphous precursor gel for obtaining an artificial mineral includes a combination of various elements such as metal elements, semiconductor elements, chalcogenes and halogens. In addition, amorphous precursor gels may also contain an acid and an alkali for adjusting the pH, and may further contain an organic molecule (a surfactant, an amine-based molecule, or the like) called a structure directing agent, a polymer compound, or the like. Due to such a complicated configuration, even if the mixing ratio and the mixing (aging) time of the components contained in an amorphous precursor gel are determined, the aggregated state of the elementary units in the amorphous precursor gel changes depending on the conditions (human factors, season factors, scale factors, device factors, and the like) of the process from preparation to crystallization of the amorphous precursor gel, and the crystal structure and quality of the finally obtained artificial mineral are not stabilized.

On the other hand, in the production method of the present invention, since the amorphous precursor gel is frozen to fix the aggregated state of the elementary units and then dried, it is possible to suppress various influences exerted on the amorphous precursor gel from preparation to crystallization of the amorphous precursor gel, and it is possible to stably obtain an artificial mineral having an intended crystal structure and physical properties. Therefore, it is possible to design the material of the artificial mineral while theoretically considering the characteristics of the elements. Therefore, the present invention is useful as a production method of an artificial mineral used as a highly functional material for a flat plate for gas permeation, a catalyst, and the like.

For example, a BEA zeolite has not been able to be molded alone so far, but by using the production method of the present invention, a flat plate for gas permeation including only a BAE zeolite can be molded.

The amorphous precursor gel used in the production method of an artificial mineral of the present invention may contain one or more kinds of metal elements selected from aluminum (Al), scandium (Sc), titanium (Ti), vanadium (V), chromium (Cr), manganese (Mn), iron (Fe), cobalt (Co), nickel (Ni), copper (Cu), zinc (Zn), gallium (Ga), yttrium (Y), zirconium (Zr), niobium (Nb), molybdenum (Mo), ruthenium (Ru), rhodium (Rh), palladium (Pd), silver (Ag), cadmium (Cd), indium (In), tin (Sn), lanthanoid (La) elements, hafnium (Hf), tantalum (Ta), tungsten (W), rhenium (Re), and osmium (Os). Among these metal elements, Al mainly has a tetracoordinated tetrahedral structure in the precursor gel, and the other metal elements have a hexacoordinated octahedral structure. In addition, Ti and Zn may have a structure of a tetracoordinated plane in addition to a hexacoordinated octahedral structure.

In addition, the amorphous precursor gel used in the production method of an artificial mineral according to the present invention may contain one or more kinds of semiconductor elements selected from silicon (Si), phosphorus (P), germanium (Ge), arsenic (As), selenium (Se), antimony (Sb), tellurium (Te), and bismuth (Bi), in addition to the metal elements described above. These semiconductor elements mainly have a tetracoordinated tetrahedral structure in the precursor gel.

Furthermore, the amorphous precursor gel used in the production method of an artificial mineral according to the present invention may appropriately contain a chalcogen, such as oxygen (O) and sulfur (S), and a halogen, such as fluorine (F), chlorine (Cl), bromine (Br), and iodine (I), in addition to the metal elements and the semiconductor elements.

Oxygen (O) as a chalcogen is covalently bonded to the metal elements and the semiconductor elements described above to form a tetracoordinated tetrahedral structure or a hexacoordinated octahedral structure. In addition, sulfur (S) as a chalcogen forms a tetracoordinated tetrahedral structure as SO4. Therefore, oxygen (O) and sulfur (S) are important as elements constituting the crystal structure of the artificial mineral.

Furthermore, the amorphous precursor gel may contain an organic molecule or a polymer containing elements such as nitrogen (N) and carbon (C) as a structure directing agent.

Although organic molecules and polymers containing elements such as nitrogen (N) and carbon (C) have unstable structures, in the present invention, since nanostructures between atoms are fixed by freezing the aggregated state of the elementary units before crystallization of the amorphous precursor gel, an unstable structure can be included in the amorphous precursor gel.

For example, in the synthesis of a zeolite, the crystallinity of the zeolite is slightly lost by mixing 10% or so of a heterogeneous tetracoordinated tetrahedron (called heterotetrahedron) such as methyltriethoxysilane (CH₃Si(OH₅C₂)₃) with tetraethoxysilane (Si(OH₅C₂)₄), and the active sites of a superstrong acid originally present inside the pores of the crystal particles is present on the surface of the crystal (Non Patent Literature 4). However, since the structure of the heterotetrahedron in the precursor gel is unstable, the ratio of the active sites of the superstrong acid present on the crystal surface of the zeolite is not constant. On the other hand, in the present invention, since a precursor gel is freeze-dried before crystallization, even if the precursor gel contains an unstable structure, the structure is fixed. Therefore, it is possible to increase the probability that an artificial mineral having a desired crystal structure and physical properties is obtained.

When the abundance ratio of the heterotetrahedron in the amorphous precursor increases, the amorphous precursor gel can be taken out as a powder or a film in an amorphous state (Patent Literature 1). Although the presence of the constituent components of the heterotetrahedron is disadvantageous in the sense of requiring the completeness of the crystal, the constituent components of the heterotetrahedron can be effectively utilized from the viewpoint of industrially utilizing the crystal of the artificial mineral as a catalyst or a functional material.

From the above, it is considered that a synthetic zeolite is selected as the artificial mineral, and depolymerization of a polymer is performed using the superstrong acid sites of the synthetic zeolite. For example, it is known that a beta (BEA) type zeolite serves as a catalyst for catalytically decomposing a straight-chain hydrocarbon (paraffin) (Patent Literature 2).

A BEA zeolite can be synthesized by adjusting a precursor gel using colloidal silica as a Si (tetracoordinated tetrahedron) source, aluminum sulfate as an Al (tetracoordinated tetrahedron and superstrong acid sites) source, and tetraethylammonium hydroxide as a structure directing agent. At this time, when methyltriethoxysilane (CH₃Si(OH₅C₂)₃) is used as a part of the Si source in the precursor gel, a substantially octahedron of the BEA zeolite appears outside the crystal particles. This makes it possible to form a catalyst that more strongly catalytically decomposes a straight-chain hydrocarbon.

When an artificial mineral crystal is synthesized (manufactured) using a heterotetrahedron such as methyltriethoxysilane as a part of a Si source, if a precursor gel of the artificial mineral is not stable, a synthesis process of exposing a part of a substantially octahedron to surfaces of crystal particles while maintaining crystallinity of a BEA zeolite must be unstable. When the precursor gel is freeze-dried and then subjected to crystallization operation (hydrothermal method or dry gel conversion method), the obtained BEA zeolite exhibits stable catalyst performance.

According to Non Patent Literature 5, in a conventional method for preparing a precursor by heating and drying, even if a heterotetrahedron such as methyltriethoxysilane can be introduced into a BEA zeolite, the content of the heterotetrahedron is limited to 8.5%. The precursor having a heterotetrahedron content of 8.5% or more is not crystallized and becomes amorphous by the operation of dry gel conversion. On the other hand, when a freeze drying method is used at the time of preparing the precursor, even if 10% or 15% of methyltriethoxysilane is introduced into the precursor, a BEA zeolite is obtained by the operation of dry gel conversion. These BEA zeolites maintain a crystal skeleton, but it has been found that crystals with partial crystallinity disturbance are formed from a baseline change with 2θ ranging from 15° to 35° in powder X-ray diffraction data. This increases the probability that the superstrong acid sites are located on the surface of the crystal.

In general, a metal element having a hexacoordinated octahedron is very often used for synthesis of artificial minerals. Therefore, if the precursor gel is adjusted so that two ligands among the ligands (R) bonded to the metal element (M) of the hexacoordinated octahedron are ligands other than R, it is easy to design an artificial mineral as a functional material or a catalyst. Such a heterogeneous hexacoordinated octahedron can be referred to as heterooctahedron. The same applies to Al or a semiconductor element (Semi) having a tetracoordinated tetrahedral structure, and the precursor gel can be adjusted so that some ligands are different from the ligands, and such a tetracoordinated tetrahedron can be referred to as heterotetrahedron.

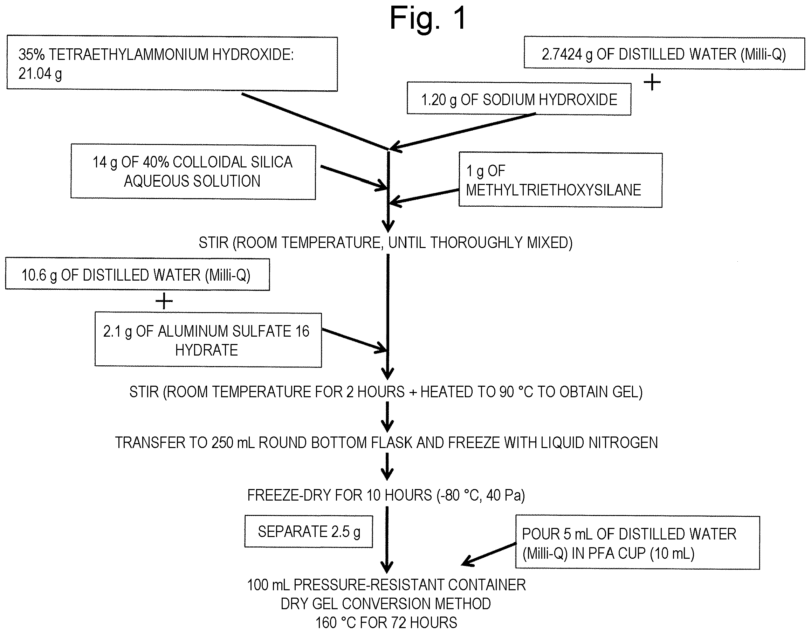

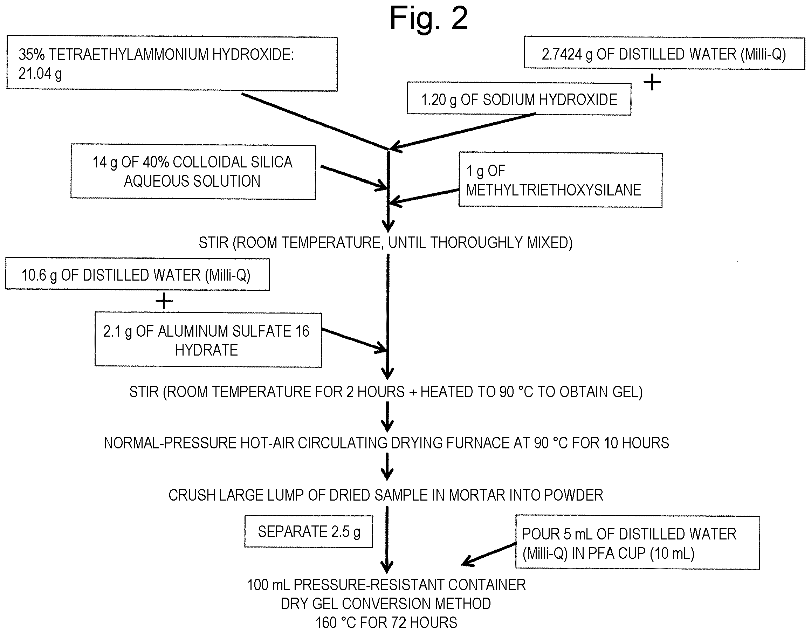

The following describes experimental examples in which an artificial mineral is produced by the method of the present invention in which an amorphous precursor gel is freeze-dried, and a comparative example in which an artificial mineral is produced by a conventional method in which an amorphous precursor gel is not freeze-dried, with reference to Figs. 1 and 2. In the experimental examples and the comparative example, BEA zeolites (beta zeolites) were produced as artificial minerals.

### [First Experimental Example]

Fig. 1 is a diagram illustrating a procedure of the experimental examples. As shown in Fig. 1, first, 21.04 g of 35% tetraethylammonium hydroxide (manufactured by Sigma-Aldrich Japan (hereinafter, Sigma-Aldrich)), 2.7424 g of distilled water (ultrapure water (conductivity 18.2 MΩ·cm, e.g., Milli-Q water)), and 1.20 g of sodium hydroxide were put in a 100 mL beaker to prepare an aqueous solution. To the aqueous solution, 14 g of a 40% colloidal silica aqueous solution (manufactured by Sigma-Aldrich) and 1 g of methyltriethoxysilane (manufactured by Shin-Etsu Chemical Co., Ltd.) were added and stirred. Furthermore, 2.1 g of aluminum sulfate 16 hydrate (manufactured by Sigma-Aldrich) was dissolved in 10.6 g of distilled water (Milli-Q water), and the resulting mixture was mixed in the container and stirred at room temperature for 2 hours. Thereafter, the mixture in the container was continuously stirred while being heated to 90 °C until the mixture became a gel, and then a precursor gel was obtained.

The precursor gel in the container was then transferred to a 250 mL round bottom flask, which was immersed in liquid nitrogen. About 10 minutes after immersion in liquid nitrogen, it was confirmed that the entire precursor gel in the round bottom flask was sufficiently frozen, and the round bottom flask was transferred to a freeze drying machine (Freeze Dryer (DC801), manufactured by Yamato Scientific Co., Ltd.), and subjected to a freeze drying treatment for 10 hours. The temperature and pressure of the freeze drying treatment were -81 °C and 40 Pa, respectively.

After the freeze drying treatment, a smooth fine powder was formed in the round bottom flask taken out from the freeze drying machine. In one pressure-resistant container, 2.5 g of this fine powder was placed together with a cup made of a fluororesin (perfluoroethylene propene copolymer (PFA)) containing 5 mL of distilled water (Milli-Q water), and the fine powder was crystallized by a dry gel conversion method (160 °C, 72 hours). This crystallized product is referred to as BEA zeolite (1).

In a mortar, 0.1 g of the BEA zeolite (1) and 2 g of low-density polyethylene powder (Sigma-Aldrich) as a reagent were thoroughly mixed. When 0.05 g of the mixed powder was separated, and the decomposition product of the separated mixed powder was observed while the temperature was raised with a gas chromatograph, propylene was obtained at a ratio of 80% from 280 °C to 350 °C.

### [Comparative Example]

Fig. 2 shows a procedure of a comparative example. As can be seen from Figs. 1 and 2, in this comparative example, a precursor gel was obtained in the same procedure using the same amount of the same material as in First Experimental Example described above. Then, the obtained precursor gel was dried by a conventional heating method. That is, the precursor gel in the container was placed in a drying furnace (OF-450 V manufactured by ETTAS) at 90 °C while being placed in the container, and dried for 10 hours. Since a lump body was formed in the container taken out from the drying furnace, the lump body was crushed in a mortar into a powder. In the same manner as in the experimental example, 2.5 g of this powder was placed in one pressure-resistant container together with a cup made of a fluororesin (perfluoroethylene propene copolymer (PFA)) containing 5 mL of distilled water (Milli-Q water), and the fine powder was crystallized by a dry gel conversion method (160 °C, 72 hours). This crystallized product is referred to as BEA zeolite (2).

### [Catalytic Action of BEA Zeolite]

After 0.1 g of each of the BEA zeolites (1) and (2) was weighed, each weighed zeolite was thoroughly mixed with 2 g of a low-density polyethylene powder (manufactured by Sigma-Aldrich) in a mortar to obtain a mixed powder. Then, 0.05 g of each mixed powder was introduced into a gas chromatograph, and a gas chromatogram of a decomposition product was observed while the temperature was raised. As a result, a peak derived from propylene was observed from 320 °C to 350 °C in both the mixed powder of the BEA zeolite (1) and the mixed powder of the BEA zeolite (2). From the peak area, about 80% of the low-density polyethylene powder was decomposed into propylene in the BEA zeolite (1), whereas only about 20% of the low-density polyethylene powder was decomposed into propylene in the BEA zeolite (2).

From this result, it was found that both the BEA zeolite (1) and the BEA zeolite (2) have a property of decomposing polyethylene into propylene by contacting the polyethylene, but the BEA zeolite (1) is more excellent as a catalyst for decomposition of polyethylene than the BEA zeolite (2).

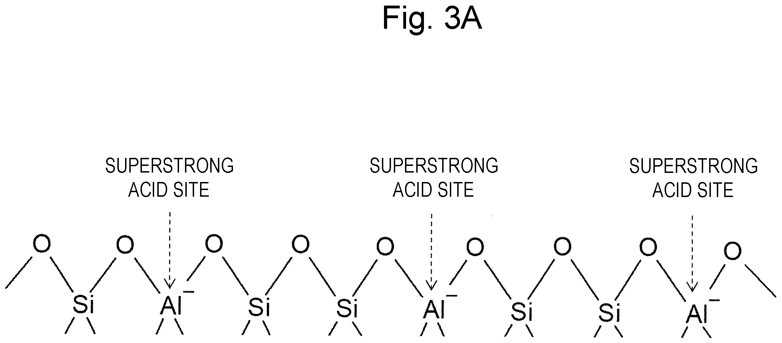

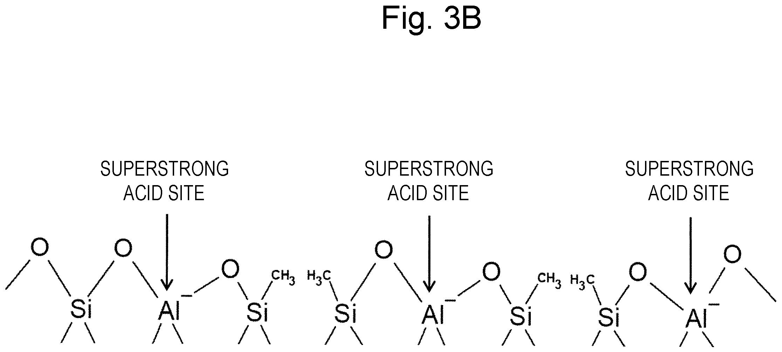

The catalytic function of zeolites is exerted by the superstrong acid sites contained in the crystal structure. From the above results, it was inferred that in the BEA zeolite (2), the superstrong acid sites were located at relatively deep positions of the crystal as shown in Fig. 3A, whereas in the BEA zeolite (1), the superstrong acid sites were located near the surface as shown in Fig. 3B. This is because freezing the precursor gel before the amorphous precursor gel was crystallized, enabled fixing of the entire precursor gel to a three-dimensional structure in which the superstrong acid sites are located near the surface of the crystal structure by crystallization of the precursor. It is considered that the intended zeolite is obtained by appropriately setting the timing, conditions, and the like of freeze drying.

### [Second Experimental Example]

As in First Experimental Example, Second Experimental Example was performed according to the procedure shown in Fig. 1. First, 21.25 g of 35% tetraethylammonium hydroxide (manufactured by Sigma-Aldrich Japan (hereinafter, Sigma-Aldrich)), 2.7319 g of distilled water (ultrapure water (conductivity 18.2 MΩ·cm, e.g., Milli-Q water)), and 1.23 g of sodium hydroxide were put in a 100 mL beaker to prepare an aqueous solution. To the aqueous solution, 13.77 g of a 40% colloidal silica aqueous solution (manufactured by Sigma-Aldrich) and 1.7 mL of methyltriethoxysilane (manufactured by Shin-Etsu Chemical Co., Ltd.) were added and stirred. Furthermore, 2.1 g of aluminum sulfate 16 hydrate (manufactured by Sigma-Aldrich) was dissolved in 10.6 g of distilled water (Milli-Q water), and the resulting mixture was mixed in the container and stirred at room temperature for 2 hours. Thereafter, the mixture in the container was continuously stirred while being heated to 90 °C until the mixture became a gel, and then a precursor gel was obtained.

Since the procedure of the subsequent processing (freeze-drying treatment of precursor gel, crystallization of fine powder obtained by freeze-drying treatment) is the same as that of First Experimental Example, the description of the procedure is omitted. In the crystallized product (referred to as BEA zeolite (3)) obtained in Second Experimental Example, methyltriethoxysilane as a heterotetrahedron occupied 8.5 mol% of the crystal skeleton.

In a mortar, 0.1 g of the BEA zeolite (3) and 2 g of low-density polyethylene powder (Sigma-Aldrich) as a reagent were thoroughly mixed to obtain a mixed powder. When 0.05 g of the mixed powder was separated, and the decomposition product of the separated mixed powder was observed while the temperature was raised with a gas chromatograph, propylene was obtained at a ratio of 80% from 280 °C to 350 °C.

### [Third Experimental Example]

As in First Experimental Example, Third Experimental Example was performed according to the procedure shown in Fig. 1. First, 21.31 g of 35% tetraethylammonium hydroxide (manufactured by Sigma-Aldrich Japan (hereinafter, Sigma-Aldrich)), 2.76 g of distilled water (ultrapure water (conductivity 18.2 MΩ·cm, e.g., Milli-Q water)), and 1.23 g of sodium hydroxide were put in a 100 mL beaker to prepare an aqueous solution. To the aqueous solution, 13.57 g of a 40% colloidal silica aqueous solution (manufactured by Sigma-Aldrich) and 2 mL of methyltriethoxysilane (manufactured by Shin-Etsu Chemical Co., Ltd.) were added and stirred. Furthermore, 2.13 g of aluminum sulfate 16 hydrate (manufactured by Sigma-Aldrich) was dissolved in 10.13 g of distilled water (Milli-Q water), and the resulting mixture was mixed in the container and stirred at room temperature for 2 hours. Thereafter, the mixture in the container was continuously stirred while being heated to 90 °C until the mixture became a gel, and then a precursor gel was obtained.

Since the procedure of the subsequent processing (freeze-drying treatment of precursor gel, crystallization of fine powder obtained by freeze-drying treatment) is the same as that of First Experimental Example, the description of the procedure is omitted. The crystallized product obtained in Third Experimental Example was a BEA zeolite containing 10 mol% of methyltriethoxysilane as a heterotetrahedron (hereinafter, this is referred to as BEA zeolite (4)).

### [Fourth Experimental Example]

As in First Experimental Example, Fourth Experimental Example was performed according to the procedure shown in Fig. 1. First, 21.38 g of 35% tetraethylammonium hydroxide (manufactured by Sigma-Aldrich Japan (hereinafter, Sigma-Aldrich)), 2.75 g of distilled water (ultrapure water (conductivity 18.2 MΩ·cm, e.g., Milli-Q water)), and 1.24 g of sodium hydroxide were put in a 100 mL beaker to prepare an aqueous solution. To the aqueous solution, 12.74 g of a 40% colloidal silica aqueous solution (manufactured by Sigma-Aldrich) and 3 mL of methyltriethoxysilane (manufactured by Shin-Etsu Chemical Co., Ltd.) were added and stirred. Furthermore, 2.14 g of aluminum sulfate 16 hydrate (manufactured by Sigma-Aldrich) was dissolved in 10.13 g of distilled water (Milli-Q water), and the resulting mixture was mixed in the container and stirred at room temperature for 2 hours. Thereafter, the mixture in the container was continuously stirred while being heated to 90 °C until the mixture became a gel, and then a precursor gel was obtained.

Since the procedure of the subsequent processing (freeze-drying treatment of precursor gel, crystallization of fine powder obtained by freeze-drying treatment) is the same as that of First Experimental Example, the description of the procedure is omitted. The crystallized product obtained in Fourth Experimental Example was a BEA zeolite containing 15 mol% of methyltriethoxysilane as a heterotetrahedron (hereinafter, this is referred to as BEA zeolite (5)).

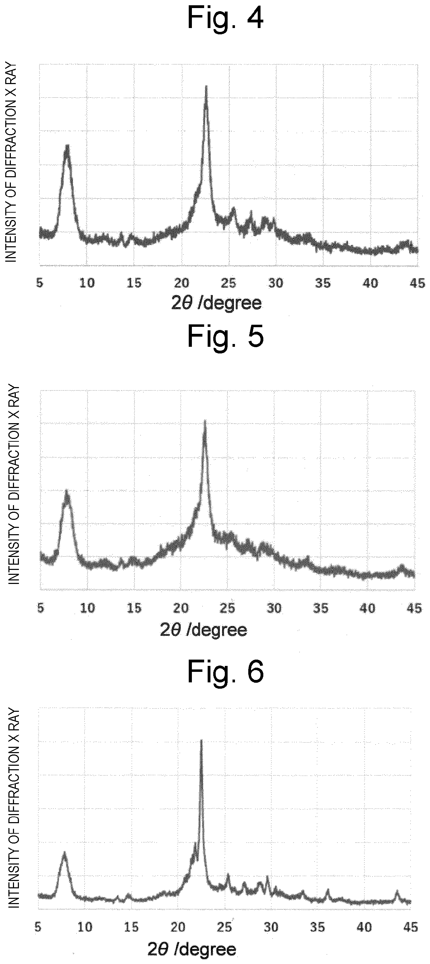

Figs. 4 and 5 are X-ray powder diffraction charts of the BEA zeolite (4) and the BEA zeolite (5) obtained in Third Experimental Example and Fourth Experimental Example, respectively. In addition, Fig. 6 is an X-ray powder diffraction chart of a BEA zeolite containing no heterotetrahedron. As can be seen from the baseline change in 2θ of these diffraction charts in the range of 15° to 35°, it was confirmed that the BEA zeolites (4) and (5) are crystals having partial crystallinity disturbance unlike the BEA zeolite containing no heterotetrahedron. From this, it was presumed that the BEA zeolites (4) and (5) have a high probability that the superstrong acid sites are located on the surfaces of the crystals.

### [Fifth Experimental Example]

As in First Experimental Example, Fifth Experimental Example was performed according to the procedure shown in Fig. 1. First, 21.32 g of 35% tetraethylammonium hydroxide (manufactured by Sigma-Aldrich Japan (hereinafter, Sigma-Aldrich)), 2.76 g of distilled water (ultrapure water (conductivity 18.2 MΩ·cm, e.g., Milli-Q water)), and 1.27 g of sodium hydroxide were put in a 100 mL beaker to prepare an aqueous solution. To the aqueous solution, 15.09 g of a 40% colloidal silica aqueous solution (manufactured by Sigma-Aldrich) was added and stirred. Furthermore, 2.13 g of aluminum sulfate 16 hydrate (manufactured by Sigma-Aldrich) was dissolved in 10.7 g of distilled water (Milli-Q water), and the resulting mixture was mixed in the container and stirred at room temperature for 2 hours. Thereafter, the mixture in the container was continuously stirred while being heated to 90 °C until the mixture became a gel, and then a precursor gel was obtained.

The precursor gel in the container was then transferred to a 250 mL round bottom flask, which was immersed in liquid nitrogen. About 10 minutes after immersion in liquid nitrogen, it was confirmed that the entire precursor gel in the round bottom flask was sufficiently frozen, and the round bottom flask was transferred to a freeze drying machine (Freeze Dryer (DC801), manufactured by Yamato Scientific Co., Ltd.), and subjected to a freeze drying treatment for 10 hours. The temperature and pressure of the freeze drying treatment were -81 °C and 40 Pa, respectively.

After the freeze drying treatment, a smooth fine powder was formed in the round bottom flask taken out from the freeze drying machine. After 0.99 g of this fine powder was separated and kneaded together with 200 µL of distilled water (Milli-Q water) in a mortar into a clay-like mixture, the resulting mixture was molded into a flat plate with fingertips. This flat plate was sandwiched between flat plates of polytetrafluoroethylene (PTFE), placed in one pressure-resistant container together with a cup made of a fluororesin (perfluoroethylene propene copolymer (PFA)), and the fine powder was crystallized by a dry gel conversion method (160 °C, 72 hours). This crystallization gave a flat plate-shaped BEA zeolite having a thickness of 2 mm.

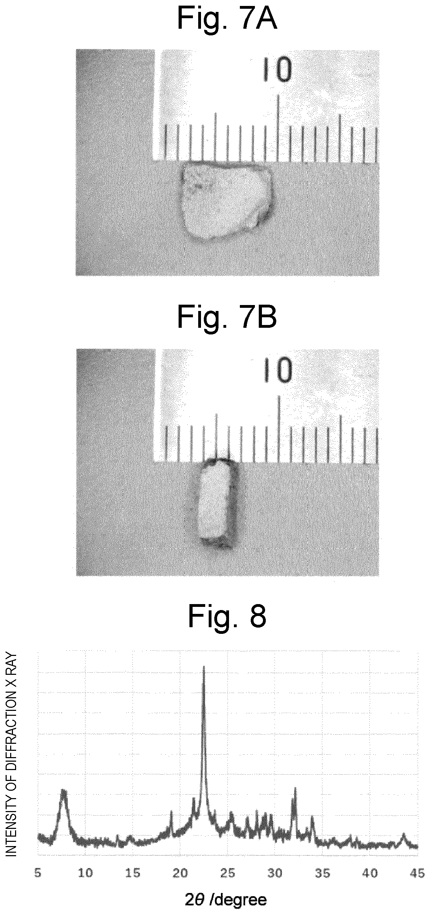

Figs. 7A and 7B are an appearance photograph of the flat plate-shaped BEA zeolite viewed from a wide side and an appearance photograph of the flat plate-shaped BEA zeolite viewed from a narrow side. In addition, Fig. 8 is an X-ray powder diffraction chart of the flat plate-shaped BEA zeolite. From Fig. 8, it was confirmed that the flat plate-shaped BEA zeolite was a crystal having partial crystallinity disturbance.

This flat plate-shaped BEA zeolite was loaded in a gas permeator, and the permeation coefficient was measured while hydrogen gas was flowed at 25 °C. As a result, a measurement result of 8 × 10⁻⁵ mol/m² sPa was obtained.

## Claims

1. A production method of an artificial mineral, the method crystallizing an amorphous precursor gel containing one or more kinds of metal elements by a synthesis reaction in which the amorphous precursor gel is heated and pressurized under a predetermined condition, the method comprising:
freezing and drying the amorphous precursor gel under a predetermined condition before the synthesis reaction.

2. The production method of an artificial mineral according to claim 1, wherein the predetermined condition is such a condition that an aggregated state of elementary units in the amorphous precursor gel is fixed.

3. The production method of an artificial mineral according to claim 1 or 2, wherein the synthesis reaction is a method selected from a deposition precipitation method, a hydrothermal synthesis method, a solvothermal method, a dry gel conversion method, an atom planting method, and a firing method.

4. The production method of an artificial mineral according to any one of claims 1 to 3, wherein
the amorphous precursor gel contains one or more kinds of elements selected from scandium, titanium, vanadium, chromium, manganese, iron, cobalt, nickel, copper, zinc, gallium, yttrium, zirconium, niobium, molybdenum, ruthenium, rhodium, palladium, silver, cadmium, indium, tin, lanthanoid elements, hafnium, tantalum, tungsten, rhenium, and osmium, and
in the amorphous precursor gel, an element contained in the amorphous precursor gel has a coordination structure having a hexacoordinated octahedron as a unit structure, and at least some unit structures are heterogeneous hexacoordinated octahedrons in which two ligands among six ligands are different from other four ligands.

5. The production method of an artificial mineral according to any one of claims 1 to 3, wherein
the amorphous precursor gel contains one or more kinds of elements selected from aluminum, silicon, phosphorus, germanium, arsenic, selenium, antimony, tellurium, and bismuth, and
in the amorphous precursor gel, an element contained in the amorphous precursor gel has a coordination structure having a tetracoordinated tetrahedron as a unit structure, and at least some unit structures are heterogeneous tetracoordinated tetrahedrons in which one ligand among four ligands is different from other three ligands.

6. The production method of an artificial mineral according to claim 4, wherein the amorphous precursor gel contains the heterogeneous hexacoordinated octahedrons at a ratio of more than 8.5 mol% and 15 mol% or less.

7. The production method of an artificial mineral according to claim 5, wherein the amorphous precursor gel contains the heterogeneous tetracoordinated tetrahedrons at a ratio of more than 8.5 mol% and 15 mol% or less.

8. An artificial mineral produced by the production method according to any one of claims 4 to 7, wherein a superstrong acid site is located on a surface of a crystal.
